# EUROPÄISCHE PATENTSCHRIFT

(11) **EP 0 794 047 B1**
(45) Veröffentlichungstag und Bekanntmachung des Hinweises auf die Patenterteilung: **23.01.2002**
(21) Anmeldenummer: 97103721.3
(22) Anmeldetag: 06.03.1997
(51) Int. Cl.: B29C 45/73, B29C 33/04

(54) **Dichtelement und dessen Verwendung zur Umlenkung von Temperierfluiden in Spritzguss-und Druckgusswerkzeugen**
Sealing member and its application for turning round temperating fluids in injection and dye casting moulds
Elément d'étanchéité et son utilisation pour retourner des fluides tempérés dans des outils d'injection et de coulée sous pression

(30) Priorität: 09.03.1996 DE 29604373 U
(43) Veröffentlichungstag der Anmeldung: 10.09.1997
(73) Patentinhaber: Ziegler, Rüdiger, 73061 Ebersbach (DE)
(72) Erfinder: Ziegler, Rüdiger, 73061 Ebersbach (DE)

(56) Entgegenhaltungen:
- EP-A- 0 566 791
- DE-B- 2 436 039

## Beschreibung

Die Erfindung betrifft ein Dichtelement und dessen Verwendung zur Umlenkung von Temperierfluiden in Spritzguß- und Druckgußwerkzeugen. Diese aus Formplatten aufgebauten Werkzeuge benötigen eine Temperierfluiddurchströmung, deren Kanalführung mit Hilfe derartiger Dichtelemente gestaltet werden kann.

Spritzgießformen finden im allgemeinen für die Verarbeitung von Kunststoff Anwendung, jedoch auch bei der Herstellung von Metallguss. Jede Spritzgießform besteht aus mehreren aneinandergereihten Platten, die jeweils unterschiedliche Aufgaben übernehmen. Beispielsweise sind Halteplatten für die Aufnahme der Formeinsätze, in denen das Spritzgießteil hergestellt wird, vorhanden.

In die Formeinsätze wird Material im flüssigen Zustand eingespritzt, dieser wird durch thermisches Aufschmelzen des jeweiligen Rohstoffs erreicht. Der flüssige Zustand kann durch Wärmezufuhr mittels eines flüssigen Wärmeträgers beibehalten werden, die Erstarrung innerhalb der Formeinsätze erfolgt durch Abkühlung, Wärmeübertragung an ein Fluid niedrigerer Temperatur. Zu diesem Zweck werden die Halteplatten und Formeinsätze von den Temperierfluiden in vielfältigen Kanälen durchströmt.

Diese Kanalführung muß jedem Formaufbau individuell angepasst werden. Zu diesem Zweck werden Temperierkanäle in Form von Bohrungen in die Formplatten eingebracht.

Sämtliche Bohrungen müssen in die massiven Formplatten ausgeführt werden, große Bohrtiefen erfordern dadurch einen großen Fertigungsaufwand.

Die im Inneren einer Form liegenden Bereiche, speziell die Formeinsätze, können nur über entsprechend lange Bohrungen erreicht werden. Oftmals dient ein solchermaßen erzeugter Kanal aber nicht der Verbindung des Formeinsatzes mit der Peripherie, sondern stellt nur einen kurzen Verbindungskanal im Werkzeuginneren dar. Die durch den Bohrvorgang entstandene Öffnung muss dann nachträglich mit einem Stopfen verschlossen werden, dieser abgeschlossene Teil des Kanals wird anschließend nicht vom Temperierfluid durchflossen und ist für die Werkzeugfunktion nutzlos.

Zusätzlich muss eine Abdichtung in Form von O-Ringen installiert werden, deren Ringnuten zur Aufnahme aufwendig herzustellen sind.

Ein weiterer Nachteil besteht darin, daß oftmals Umwege für den Temperierkanalverlauf in Kauf genommen werden müssen, die das unflexible Fertigungsverfahren Bohren erzwingt.

Für die Vereinfachung der Temperierkanalgestaltung sind zum Beispiel auch Kühlpatronen als Bauteile zur Kühlwasserumlenkung, wie in G 86 18 674.4 beschrieben, bekannt. Damit wird die Durchströmung einer Sackbohrung ermöglicht, indem die Kühlpatrone eine Zwischenwand einführt. Die Erstellung und Führung der Temperierkanäle wird dadurch nicht vereinfacht, vielmehr stellt die Kühlpatrone nur eine Form des Kanalabschlusses im Werkzeuginneren dar.

Eine weitere Möglichkeit Kühlflüssigkeit in Spritzgusswerkzeugen zu leiten ist aus der EP-A-0 556 791 bekannt. Hierbei enthält das Spritzgusswerkzeug, das die Formnester enthält, durchgehende Temperierkanäle in Gestalt von geraden Bohrungen. An einem Ende des Werkzeugs enden die Bohrungen in Gewinden, in die Hohlschrauben eingeschraubt werden. Auf jeder der Hohlschrauben sitzen ringförmige Fittings, die mit Hilfe von Dichtungen gegen das Spritzgusswerkzeug einerseits und gegen den Kopf der Hohlschraube andererseits abgedichtet sind. Die Fittings von benachbarten Hohlschrauben stecken abgedichtet teleskopartig ineinander.

Der Erfindung liegt daher die Aufgabe zu Grunde ein Dichtelement und dessen Verwendung zu entwickeln, das die Gestaltung und Anfertigung von Temperierkanälen in Spritzgußwerkzeugen vereinfacht, das mehr Möglichkeiten der Kanalführung bietet und daß sowohl das Dichtelement, als auch die Bearbeitung der Formplatten kostengünstig herzustellen ist.

Diese Aufgabe wird erfindungsgemäß dadurch gelöst, daß das Dichtelement als einstückiges ovalzylindrisches Bauteil ausgebildet ist, das mit mehreren in Achsrichtung liegenden Durchgangsöffnungen versehen ist, die auf der Unterseite jeweils einzeln von einem Dichtwulst umschlossen werden und auf der Oberseite in einen gemeinsamen, in Achsrichtung eingesenkten Durchströmungsraum münden, der von einem umlaufenden Dichtwulst umgeben ist.

Als Material wird vorzugsweise ein thermoplastischer Kunststoff oder Gummi benutzt. Die Gestaltung des Dichtelements ermöglicht dann geradezu ideal die einteilige Herstellung als Spritzguß- oder Preßteil.

Das Dichtelement kann in nahezu beliebiger Länge gestaltet werden, so sind Varianten mit mehr als zwei Durchgangsöffnungen möglich.

Weiterhin kann die ovale Grundgeometrie zu einem abgewinkelten Bauteil umgestaltet werden um auch spezielle Einbausituationen in Spritzgußwerkzeugen abdecken zu können.

Wandstärken und Gesamtdimensionen sind entsprechend den auftretenden Differenzdrücken aufeinander abstimmbar.

Für große Druckdifferenzen kann im Materialinneren des Dichtelements ein aussteifender Metallkäfig mit eingespritzt werden.

Die Verwendung des Dichtelements erfolgt erfindungsgemäß dadurch, daß das Dichtelement in eine Formplatte eingesenkt wird, daß die Form der Einsenkung zylindrisch ausgeführt und vorzugsweise an die ovale Form des Dichtelementes angepasst ist, und daß die Positionierung des Dichtelements eine Verbindung oder eine Umlenkung von Temperierkanälen innerhalb des Spritzgußwerkzeugs ergibt.

Dadurch kann auf die Herstellung von Blindbohrungen und die Abdichtung zwischen den Formpartien mittels O-Ringen verzichtet werden.

Durch den bei erfindungsgemäßen Einsatz des Dichtelements möglichen Verzicht auf unnötige Blindbohrungen und die damit zusammenhängenden großen Bohrtiefen kann der Herstellungsaufwand für ein Spritzgießwerkzeug vermindert werden. Die Positionierung der Einsenkung für den Einsatz des Dichtelements kann zudem flexibler vorgenommen werden als das Einbringen der Bohrungen. So wird bei gleichem Nutzen oft ein einfacherer Verlauf der Temperierkanäle ermöglicht. Da im Werkzeug weniger Kanäle vorhanden sind, wird auch die Flexibilität für spätere Werkzeugänderungen größer, denn die Gefahr einen anderen Kanal zu kreuzen verringert sich mit deren Anzahl.

Die Aufnahme des Formeinsatzes in die Formplatte erfordert das Einfräsen einer entsprechenden Kontur. Direkt anschließend, in der gleichen Aufspannung und mit minimalen Zusatzaufwand, kann die Vertiefung für ein dazugehöriges Dichtelement eingearbeitet werden, während eine Bohrung einen Wechsel der Aufspannung um 90° erzwungen hätte.

Die für Abdichtungszwecke bisher eingesetzten O-Ringe zwischen Formplatte und Formeinsatz können entfallen, sie werden vollständig durch das Dichtelement ersetzt.

Die für die Einbringung der O-Ringe notwendigen Ringnuten entfallen ebenfalls. Der Aufwand ihrer Herstellung ist höher einzustufen als der für die Herstellung der ovalzylindrischen Einsenkung.

Das Dichtelement kann, in allen beschriebenen Ausführungen, sehr kostengünstig als Kunststoffspritzguß- oder Gummipreßteil hergestellt werden.
Die in den Formplatten notwendige Ausnehmung zum Einsatz des Dichtelements wird durch Fräsen hergestellt. Die ovale Form erlaubt dabei ideal eine Abstimmung auf genormte Fräserdurchmesser, so daß der Fräsvorgang sehr einfach und kostensparend auszuführen ist.
Ebenfalls ist ein Senkerodieren der Ausnehmung möglich.
Zu diesem Zweck kann zusätzlich zum Dichtelement die passende Senkelektrode angeboten werden.

Im folgenden wird ein Ausführungsbeispiel der Erfindung anhand von Zeichnungen näher erläutert. Es zeigen:

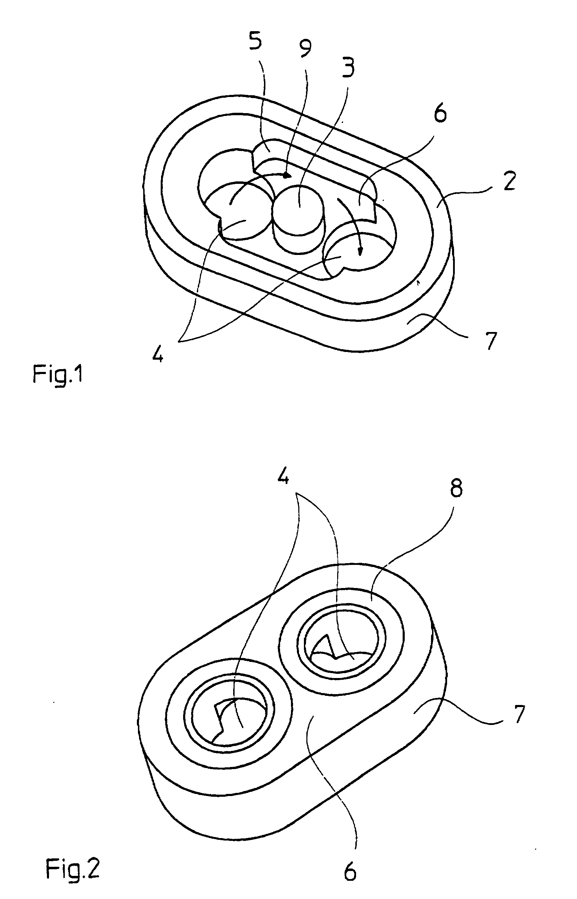

- Fig.1: eine perspektivische Ansicht des Dichtelements auf die Oberseite.
- Fig.2: eine perspektivische Ansicht des Dichtelements auf die Unterseite.
- Fig.3: eine Prinzipdarstellung der Temperierkanalführung in herkömmlicher Weise.
- Fig.4: eine Prinzipdarstellung der Temperierkanalführung unter Einsatz des Dichtelements.
- Fig.5: die Ausnehmung zum Einsatz des Dichtelements in der Formplatte.

Das Dichtelement gemäß Fig. besteht aus einem ovalzylindrischen Körper 7 der mit 2 Durchgangsöffnungen 4 versehen ist. Diese Durchgangsöffnungen münden in einen zylindrisch eingesenkten Durchströmungsraum 5 der die hydraulische Verbindung in Form der Durchströmung 9 zwischen den über die zwei Durchgangsöffnungen angeschlossenen Temperierkanälen herstellt. Die Bodenplatte 6 des Dichtelementkörpers 7 wird mit einer zylindrischen Abstützung 3 zusätzlich stabilisiert.
Der Durchströmungsraum 5 wird gemeinsam mit beiden Durchgangsöffnungen 4 von einer umlaufenden Dichtwulst 2 umschlossen und so das Temperiersystem gegenüber der Umgebung abgedichtet.
Die Durchströmung 9 kann in beliebiger Richtung erfolgen.

Auf der Unterseite werden die Durchgangsöffnungen 4 einzeln von Dichtwulsten 8 umschlossen (Fig.2)

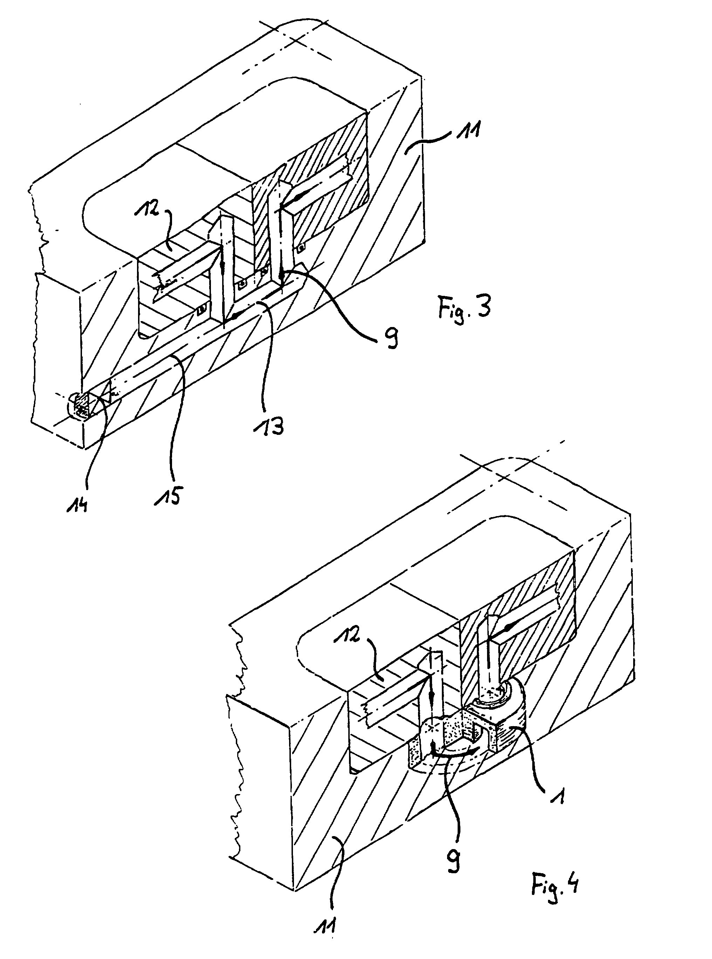

Die im Werkzeuginneren liegende Bereiche, speziell die Formeinsätze 12, werden nur über tiefe Bohrungen erreicht (Fig.3). Der Verbindungskanal 13 der die Temperierkanäle der Formeinsätze 12 verbindet wurde über die mit einem Stopfen 14 verschlossene Blindbohrung 15 erzeugt. Nur der Verbindungskanal 13 wird von der Durchströmung 9 genutzt.

Dem gegenüber wird die Temperierkanalverbindung der Formeinsätze 12 einfacher, bei Verwendung des Dichtelements 1(Fig.4).

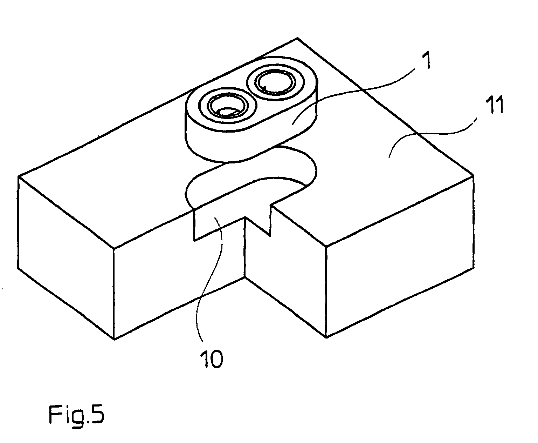

Die für die Aufnahme des Dichtelements 1 in die Formplatte 11 einzubringende Ausnehmung 10 zeigt Fig.5.

Die ovale Form wird durch einfaches lineares Verfahren eines zylindrischen Fräsers erzeugt.

## Patentansprüche

1. Dichtelement zur Umlenkung von Temperierfluiden in Spritzguss- und Druckgusswerkzeugen, wobei das Dichtelement (1) als ein einstückiges ovalzylindrisches Bauteil ausgebildet ist, das mit mehreren in Achsrichtung liegenden Durchgangsöffnungen (4) versehen ist, die auf der Unterseite jeweils einzeln von einem Dichtwulst (8) umschlossen werden und auf der Oberseite in einen gemeinsamen, in Achsrichtung eingesenkten Durchströmungsraum (5) münden, der von einem umlaufenden Dichtwulst (2) umgeben ist.

2. Dichtelement nach Anspruch 1, **dadurch gekennzeichnet, daß** als Material vorzugsweise ein thermoplastischer Kunststoff, bzw. Gummi, verwendet wird.

3. Dichtelement nach Anspruch 1 und 2, **dadurch gekennzeichnet, daß** die Gestaltung des Dichtelement dessen einteilige Herstellung als Spritzguß- oder Gummipreßteil ermöglicht.

4. Dichtelement nach Anspruch 1 bis 3, **dadurch gekennzeichnet, daß** das Dichtelement in nahezu beliebiger Länge, mit zwei oder mehr Durchgangsöffnungen gestaltet werden kann.

5. Dichtelement nach Anspruch 1 bis 4, **dadurch gekennzeichnet, daß** die ovale Grundgeometrie zu einem abgewinkelten Bauteil umgestaltet werden kann.

6. Dichtelement nach Anspruch 1 bis 5, **dadurch gekennzeichnet, daß** Wandstärken und Gesamtdimensionen entsprechend den auftretenden Differenzdrücken aufeinander abstimmbar sind.

7. Dichtelement nach Anspruch 1 bis 6, **dadurch gekennzeichnet, daß** für große Druckdifferenzen im Materialinneren des Dichtelements ein aussteifender Metallkäfig mit eingespritzt werden kann.

8. Verwendung des Dichtelements nach Anspruch 1 bis 7, **dadurch gekennzeichnet, daß** das Dichtelement in eine Formplatte eingesenkt wird, daß die Form der Einsenkung zylindrisch ausgeführt und vorzugsweise an die ovale Form des Dichtelements angepaßt ist, daß die Positionierung des Dichtelements eine Verbindung oder eine Umlenkung von Temperierkanälen innerhalb des Spritzgußwerkzeugs ergibt.

## Claims

1. Sealing element for the deflection of tempering fluid in injection moulding and diecasting tools, wherein the sealing element (1) in constructed as an oval-cylindrical structural part in one piece, which is provided with several passages (4) lying in axial direction, which are individually enclosed by a respective sealing bead (8) on the underside and on the upper side open into a common throughflow area (5) which is surrounded by a circumferential sealing bead (2).

2. Sealing element according to Claim 1, **characterised in that** a thermoplastic plastic or rubber is preferably used as material.

3. Sealing element according to Claim 1 and 2, **characterised in that** the form of the sealing element enables it to be manufactured in one piece as an injection moulded part or rubber pressed part.

4. Sealing element according to Claims 1 to 3, **characterised in that** the sealing element can be formed in virtually any desired length with two or more passages.

5. Sealing element according to Claims 1 to 4, **characterised in that** the oval basic geometric form can be changed to an angled structural part.

6. Sealing element according to Claims 1 to 5, **characterised in that** wall thicknesses and overall dimensions may be coordinated to one another in accordance with the occurring differential pressures.

7. Sealing element according to Claims 1 to 6, **characterised in that** a reinforcing metal cage can also be injected for large pressure differences in the interior of the material of the sealing element.

8. Use of the sealing element according to Claims 1 to 7, **characterised in that** the sealing element is sunk into a die plate, that the form of the sinking is cylindrical and is preferably adapted to the oval form of the sealing element, that the positioning of the sealing element results in a connection or a deviation of tempering ducts within the die casting tool.

## Revendications

1. Elément d'étanchéité pour dévier des fluides d'équilibrage de température dans des outils de moulage par injection ou de moulage sous pression, dans lequel l'élément d'étanchéité (1) est agencé sous la forme d'un élément cylindrique ovale, monobloc, qui est pourvu de plusieurs orifices de passage (4) orientés dans la direction axiale qui, sur la face inférieure, sont entourés chacun d'un bourrelet d'étanchéité (8) et, sur la face supérieure, débouchent dans une chambre de circulation (5) commune, aménagée en creux dans la direction axiale, qui est entourée d'un bourrelet d'étanchéité (2).

2. Elément d'étanchéité selon la revendication 1, **caractérisé en ce qu'**on utilise comme matériau, de préférence un matière thermoplastique.

3. Elément d'étanchéité selon les revendications 1 et 2, **caractérisé en ce que** la conformation de l'élément d'étanchéité permet sa fabrication d'un bloc, sous forme d'élément en caoutchouc moulé par injection ou sous pression.

4. Elément d'étanchéité selon les revendications 1 à 3, **caractérisé en ce que** l'élément d'étanchéité peut être réalisé en pratiquement toutes les longueurs avec deux orifices d'écoulement ou plus.

5. Elément d'étanchéité selon les revendications 1 à 4, **caractérisé en ce que** la forme de base ovale peut être modifiée pour former un élément anguleux.

6. Elément d'étanchéité selon les revendications 1 à 5, **caractérisé en ce que** les épaisseurs de parois et les dimensions totales peuvent être mutuellement adaptées en fonction des pressions différentielles présentes.

7. Elément d'étanchéité selon les revendications 1 à 6, **caractérisé en ce que** pour des différences de pression importantes, une cage métallique de rigidification peut être insérée dans le matériau de l'élément d'étanchéité.

8. Utilisation de l'élément d'étanchéité selon les revendications 1 à 7, **caractérisé en ce que** l'élément d'étanchéité est inséré dans une plaque de moule, **en ce que** la forme du logement est cylindrique et de préférence est adaptée à la forme ovale de l'élément d'étanchéité; **en ce que** la mise en place de l'élément d'étanchéité réalise une liaison ou une déviation de canaux d'équilibrage de température à l'intérieur de l'outil de moulage par injection.
